# EUROPEAN PATENT SPECIFICATION

(11) **EP 2 374 246 B1**
(45) Date of publication and mention of the grant of the patent: **03.10.2012**
(21) Application number: 09788460.5
(22) Date of filing: 02.01.2009
(51) Int. Cl.: H04L 12/56

(54) **ADMISSION CONTROL SYSTEMS AND METHODS**
ZUGANGSKONTROLLSYSTEME UND VERFAHREN
SYSTÈMES ET PROCÉDÉS DE CONTRÔLE D'ADMISSION

(43) Date of publication of application: 12.10.2011
(73) Proprietor: Telefonaktiebolaget L M Ericsson (publ), 164 83 Stockholm (SE)
(72) Inventor: STJERNHOLM, Paul, S-181 60 Lidingö (SE); HURD, Magnus, S-118 67 Stockholm (SE); PERSSON, Fredrik, S-195 58 Märsta (SE); VOIGT, Lotta, S-167 71 Bromma (SE)
(74) Representative: Kühn, Friedrich Heinrich
(86) International application number: PCT/SE2009/050001
(87) International publication number: WO 2010/077202

(56) References cited:
- WO-A-03/103327
- US-A1- 2006 002 318

## Description

### TECHNICAL FIELD

The present invention relates to admission control in a communication system.

### BACKGROUND

Mobile communications systems (e.g., communications systems based on standards like GSM, WCDMA and LTE) typically employ an admission control system to reserve certain resources for guaranteed bit rate (GBR) bearers, which most often carry real time services having high demands on latency and throughput. Services without any guaranteed performance are carried on non-GBR bearers, which typically are not governed by admission control (e.g., no set up requests are rejected).

The available resources of a system can be divided into partitions, and each partition may be associated with particular users or bearers. Some partitions may be associated with GBR bearers (these partitions are known as GBR partitions), while the remaining resources are associated with non-GBR services.

Partitioning the available resources into multiple GBR partitions allows reserving resources for certain GBR bearers or subscribers (e.g., premium subscribers). A drawback to this is that a particular GBR partition cannot be used by GBR services not assigned to the particular GBR partition, which may result in GBR bearer requests being blocked even though GBR resources are available. The alternative is to share a common partition between all GBR bearers. However, in a congestion situation, this would require soft congestion actions to admit a premium subscriber or bearer with high priority at the expense of a subscriber or bearer with a lower priority. Since a dropped call is perceived to be worse that having a call blocked at setup, deploying multiple partitions may be preferred.

Typically, each GBR partition has an associated threshold defining the amount of capacity assigned to the partition. The capacity can be expressed in terms of, for example, number of consumers, bit rate, power, or other physical measure. There may also be a limit to the amount of resources available for all GBR partitions defined.

In a packet oriented radio access network (RAN), downlink and uplink traffic is scheduled by the base station. A congestion situation arises when the amount of traffic exceeds an available capacity. This causes packets to be stalled and buffered in the base station and/or in the mobile terminal (a.k.a., user equipment (UE)). If packets are delayed sufficiently long they may eventually be discarded.

What is desired are admission control systems and methods that make more efficient use of available capacity, governing the quality of service experienced. A prior art example can be found in US 2006/002318.

### SUMMARY

In one aspect, the invention provides an adaptive admission control method. In some embodiments, this method, which may be performed by a base station, includes the following steps: storing an admission control threshold value for a guaranteed bit rate capacity partition, wherein the admission control threshold value defines the amount of capacity assigned to the guaranteed bit rate capacity partition; determining a value (%GB RBs1) representing the percentage of guaranteed bit rate bearers in the guaranteed bit rate capacity partition that do not meet a performance criteria or determining a value (%GBRBs2) representing the percentage of guaranteed bit rate bearers in the guaranteed bit rate capacity partition that meet a performance criteria; and using %GBRBs1 and/or %GBRBs2 in a process for modifying the admission control threshold value.

In some embodiments, the process for modifying the admission control threshold value includes the following steps: determining whether %GBRBs1 is greater than a threshold (RI); determining whether the admission control threshold value (ACTV) can be decreased; and decreasing the ACTV if (a) the ACTV can be decreased and (b) %GBRBs1 > RI. The step of determining whether the ACTV can be decreased may include determining whether the ACTV is greater than (i) a minimum admission control threshold value plus (ii) a decrement value.

In some embodiments, the process for modifying the admission control threshold value includes the following steps: determining whether %GBRBs2 is greater than a threshold (R2); determining whether ACTV can be increased; determining, for the guaranteed bit rate capacity partition, the number of admission requests received in a window of time, the number of admission rejections in the window of time, and the number of soft congestions actions that were taken in the window of time; determining a ratio value identifying the ratio of admission rejections and soft congestions actions relative to the number of admission requests; comparing the ratio value to a performance criteria value; and increasing ACTV if (a) ACTV can be increased and (b) %GBRBs2 > R2 and (c) the ratio value is greater than the performance criteria value. The step of determining whether the ACTV can be increased may include determining whether increasing the ACTV would cause the total amount of guaranteed bit rate capacity to exceed a predetermined total capacity.

In some embodiments, the step of determining %GBRBs1 includes: determining, for each of a plurality of guaranteed bit rate bearers included in the guaranteed bit rate capacity partition, a performance value (e.g., a computed average value) for the guaranteed bit rate bearer; and determining whether the performance value for the guaranteed bit rate bearer exceeds a performance threshold. In some embodiments, the step of determining %GBRBs2 includes: determining, for each of a plurality of guaranteed bit rate bearers included in the guaranteed bit rate capacity partition, the performance value for the guaranteed bit rate bearer; and determining whether the performance value for the guaranteed bit rate bearer is less than the performance threshold. The performance value for each guaranteed bit rate bearer may be one of: (a) an average downlink buffer size, (b) an average uplink buffer size, and (c) an average packet discard rate.

The step of determining %GBRBs1 may further include: determining, for each of a plurality of guaranteed bit rate bearers included in the guaranteed bit rate capacity partition, a second performance value and a third performance value for the guaranteed bit rate bearer; determining whether the second performance value for the guaranteed bit rate bearer exceeds a second performance threshold; determining whether the third performance value for the guaranteed bit rate bearer exceeds a third performance threshold; and determining the number of guaranteed bit rate bearers in the guaranteed bit rate capacity partition that do not meet the performance criteria, wherein a guaranteed bit rate bearer in the guaranteed bit rate capacity partition does not meet the performance criteria if: the first performance value for the guaranteed bit rate bearer exceeds the first performance threshold, the second performance value for the guaranteed bit rate bearer exceeds the second performance threshold, and the third performance value for the guaranteed bit rate bearer exceeds the third performance threshold. In some embodiments, the first performance value is an average downlink buffer size, the second performance value is an average uplink buffer size, and the third performance value is an average packet discard rate.

The step of determining %GBRBs2 may further include: determining, for each of a plurality of guaranteed bit rate bearers included in the guaranteed bit rate capacity partition, the second performance value and the third performance value for the guaranteed bit rate bearer; determining whether the second performance value for the guaranteed bit rate bearer is less than the second performance threshold; determining whether the third performance value for the guaranteed bit rate bearer is less than the third performance threshold; and determining the number of guaranteed bit rate bearers in the guaranteed bit rate capacity partition that meet the performance criteria, wherein a guaranteed bit rate bearer in the guaranteed bit rate capacity partition meets the performance criteria if: the first performance value for the guaranteed bit rate bearer is less than the first performance threshold, the second performance value for the guaranteed bit rate bearer is less than the second performance threshold, and the third performance value for the guaranteed bit rate bearer is less than the third performance threshold.

In another aspect, the present invention provides an apparatus (e.g., a base station) for performing an adaptive admission control method. In some embodiments, the apparatus includes: a data storage system that stores an admission control threshold value for a guaranteed bit rate capacity partition, wherein the admission control threshold value defines the amount of capacity assigned to the guaranteed bit rate capacity partition; a data processor coupled to the data storage system; and computer instructions stored in the data storage system, the computer instructions comprising: computer instructions configured to determine a value (%GBRBs1) representing the percentage of guaranteed bit rate bearers in the guaranteed bit rate capacity partition that do not meet a performance criteria and/or computer instructions configured to determine a value (%GBRBs2) representing the percentage of guaranteed bit rate bearers in the guaranteed bit rate capacity partition that meet a performance criteria; and computer instructions configured to use %GBRBs1 and/or %GBRBs2 to determine whether the admission control threshold value should be modified.

The above and other aspects and embodiments are described below with reference to the accompanying drawings.

### BRIEF DESCRIPTION OF THE DRAWINGS

The accompanying drawings, which are incorporated herein and form part of the specification, illustrate various embodiments of the present invention and, together with the description, further serve to explain the principles of the invention and to enable a person skilled in the pertinent art to make and use the invention. In the drawings, like reference numbers indicate identical or functionally similar elements.

FIG. 1 illustrates a portion of a mobile communications system according to some embodiments.

FIG. 2 is a diagram illustrating the partitioning of available capacity into a GBR partition and a Non-GBR partition.

FIG. 3 is a diagram illustrating that the GBR partition may be partitioned.

FIG. 4 is a diagram illustrating that the size of the GBR partitions may be adapted.

FIG. 5 is a flow chart illustrating a process according to some embodiments of the invention.

FIG. 6 is a flow chart illustrating a process according to some embodiments of the invention.

FIG. 7 is functional block diagram of a base station according to some embodiments of the invention.

### DETAILED DESCRIPTION

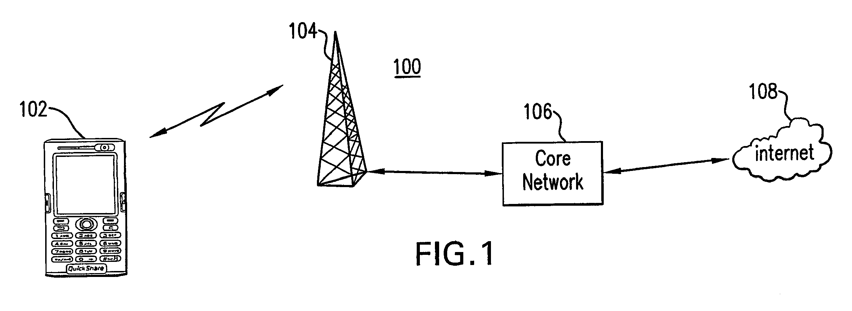

Referring now to FIG. 1, FIG. 1 illustrates a portion of a communications system 100, according to some embodiments. FIG. 1 shows a UE 102 in communication with a base station 104, which is in communication with a core network (CN) 106 (e.g., if base station 104 if part of, for example, an LTE network, base station 104 communicates with a core network node such as an mobility management entity (MME) - it is noted that the invention is also applicable to other networks, such as radio access networks where the base station connects to the CN via a radio network controller (RNC), additionally the CN node may be, for example, a mobile switching center (MSC) or media gateway (MGW)). Core network 106 may provide access to a network 108 (e.g., the Internet). In some embodiments, when a user of UE 102 desires to use a service (e.g., make a voice call or download a video), UE 102 establishes a signaling connection with a base station (e.g., base station 104), if such a connection is not already established. Once the connection with the base station is established, UE 102 transmits a service request to CN 106. CN 106 may then select a bearer and transmit to base station 104 a request message which includes a request for resources for the selected bearer and quality of service (QoS) parameters associated with the selected bearer. Base station 104 may use the QoS parameters to assign the selected bearer to a partition.

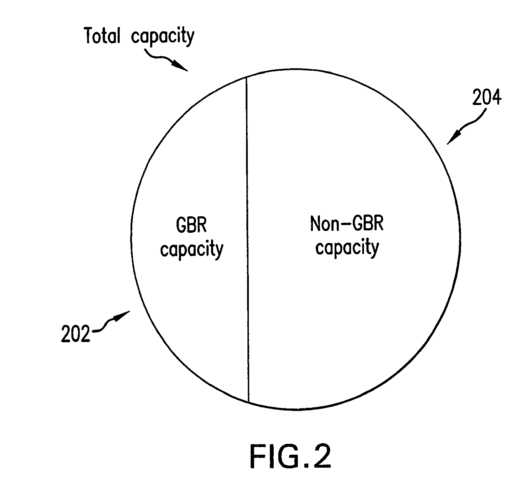

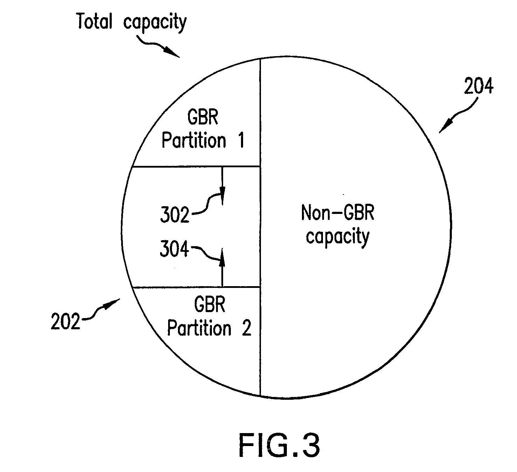

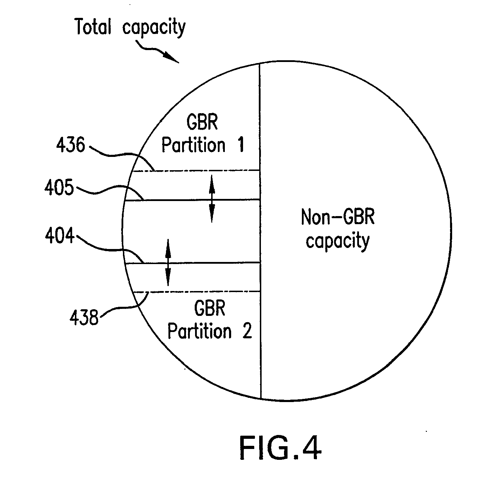

Referring now to FIG. 2, FIG. 2 illustrates the capacity of base station 104 and illustrates how this available capacity may be partitioned into a GBR partition 202 (e.g., capacity that may be used by both GBR bearers and non-GBR bearers, but the GBR bearers have priority over the non-GBR bearers) and a non-GBR partition 204 (e.g., capacity that may be used by non-GBR bearers but not GBR bearers). FIG. 3 illustrates that the GBR partition 202 itself may be divided into two or more GBR partitions. In the example shown, GBR partition 202 is subdivided into GBR partition 1 and GBR partition 2. Arrowed lines 302 and 304 represent that GBR partition 1 and GBR partition 2 may expand in size. For example, as shown in FIG. 4, if we assume GBR partition 202 is subdivided into two partitions (GBR partition 1 and GBR partition 2), then solid line 405 represents the admission threshold for GBR partition 1 and solid line 404 represents the admission threshold for GBR partition 2. That is, the capacity above line 405 is allocated to GBR partition 1, while the capacity below line 404 is allocated to GBR partition 2. As further illustrated in FIG. 4, line 404 can move anywhere between dashed line 438 and solid line 405, but can not cross those lines. Similarly, solid line 405 can move anywhere between dashed line 436 and solid line 404, but can not cross those lines. Thus, in some embodiments, the capacity allocated to GBR partition 1 will not fall below a certain minimum threshold as represented by line 436, the capacity allocated to GBR partition 2 will not fall below a certain minimum threshold as represented by line 438, and the total amount of available GBR capacity is fixed.

Embodiments of the present invention are concerned with determining whether to automatically adapt an admission threshold for a GBR partition in order to resolve a congestion situation experienced by GBR bearers in a certain GBR partition. For example, in terms of the diagram shown in FIG. 4, embodiments of the invention are concerned with determining whether to move lines 404,405 up or down.

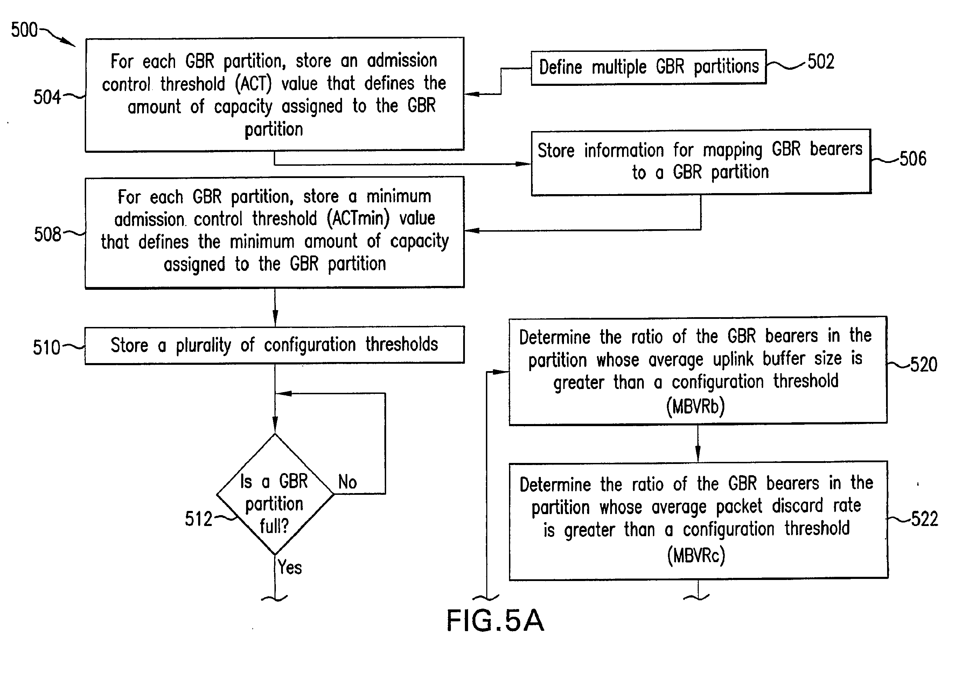

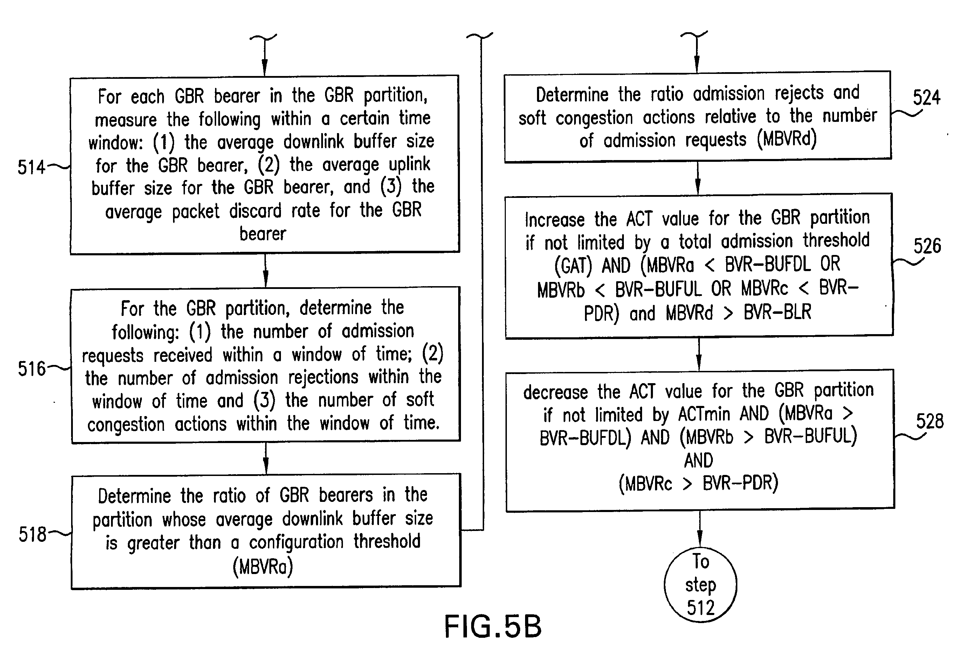

Referring now to FIG. 5, FIG. 5 is a flow chart illustrating a process 500 according to embodiments of the invention. Process 500 may begin in step 502, where multiple (i.e., two or more) GBR partitions are defined. In step 504, for each GBR partition, base station 104 stores an admission control threshold value (ACTV). This value represents the amount of capacity assigned to the GBR partition. In step 506, base station 104 stores information that is used to assign a GBR bearer to a GBR partition. In some embodiments, a GBR bearer is mapped to a GBR partition based on the QoS profile of the GBR bearer. For example, in some embodiments, base station 104 assigns a GBR bearer to a GBR partition based on a quality class indicator (QCI) and an allocation retention priority (APR) associated with the GBR bearer. Thus, in some embodiments, the information stored in step 506 specifies that any GBR bearer having a certain QoS profile should be assigned to a particular GBR partition.

In step 508, base station 104 stores, for each defined GBR partition, a minimum admission control threshold (ACTmin) value. Base station may also store threshold values RI and R2. In step 508, base station 104 may also store an increment (ICR) value that is used when increasing or decreasing a GBR partition's ACT value.

In step 510, base station 104 stores a number of performance criteria values and other configuration values. For example, in step 510, base station 104 may store: (1) a packet discard rate (PDR) defining an upper bound for an acceptable downlink PDR; (2) one or more blocking rates (BLRs) defining an upper bound for an acceptable rate of admission rejects and/or soft congestion actions (in some embodiments there is a BLR for admission rejects and a BLR for soft congestion actions); (3) a downlink buffer size (BUFDL) defining an upper bound of an acceptable buffer size per bearer in downlink; (4) an uplink buffer size (BUFUL) defining an upper bound of an acceptable buffer size per bearer in uplink; (5) a GBR admission threshold (GAT), defining the upper bound of the capacity assigned to all GBR bearers; and (6) thresholds defining upper bounds for the acceptable the rate of bearers per partition violating each partition performance criteria (BVR-X) where X = {PDR, BLR, BUFDL, BUFUL}. Performance criteria values (1), (3) and (4) may be defined on a per bearer or quality of service (QoS) class basis or partition bases, and performance criteria value (2) is defined on a per partition basis.

In step 512, base station 104 determines whether a GBR partition is full. In some embodiments, a GBR partition is considered to be full if it cannot admit another GBR bearer. If no GBR partition is full, step 512 may be repeated at another time, otherwise, process 500 proceeds to step 514.

In step 514, for each GBR bearer in the GBR partition, base station 104 measures the following performance values for a certain window of time: (1) the average downlink buffer size for the GBR bearer, (2) the average uplink buffer size for the GBR bearer, and (3) the average packet discard rate for the GBR bearer.

In step 516, for the GBR partition, base station 104 determines: (1) the number of admission requests received within a window of time; (2) the number of admission rejections within the window of time and (3) the number of soft congestion actions within the window of time.

In step 518, base station 104 determines the ratio of GBR bearers in the partition whose average downlink buffer size is greater than BUFDL (MBVRa). In step 520, base station 104 determines the ratio of GBR bearers in the partition whose average uplink buffer size is greater than BUFUL (MBVRb). In step 522, base station 104 determines the ratio of GBR bearers in the partition whose average packet discard rate is greater than PDR (MBVRc). In step 524, base station 104 determines the ratio of admission rejects and soft congestion actions relative to the number of admission requests (MBVRd).

In step 526, base station 104 increases the ACT value for the GBR partition if (a) doing so would not cause the amount of GBR capacity to exceed GAT AND (b) (MBVRa < BVR-BUFDL AND/OR MBVRb < BVR-BUFUL AND/OR MBVRc < BVR-PDR ) AND (c) (MBVRd > BVR-BLR).

In step 528, base station 104 decreases the ACT value for the GBR partition if (a) not limited by the minimum admission control threshold (i.e., if (ACTV -INC) > ACTmin) AND (b) (MBVRa > BVR-BUFDL) AND/OR (MBVRb > BVR- BUFUL) AND/OR (MBVRc > BVR-PDR).

After step 528. process 500 may return to step 512. Some of the above steps of process 500 may be optional. For example, in some embodiments, step 512 is optional.

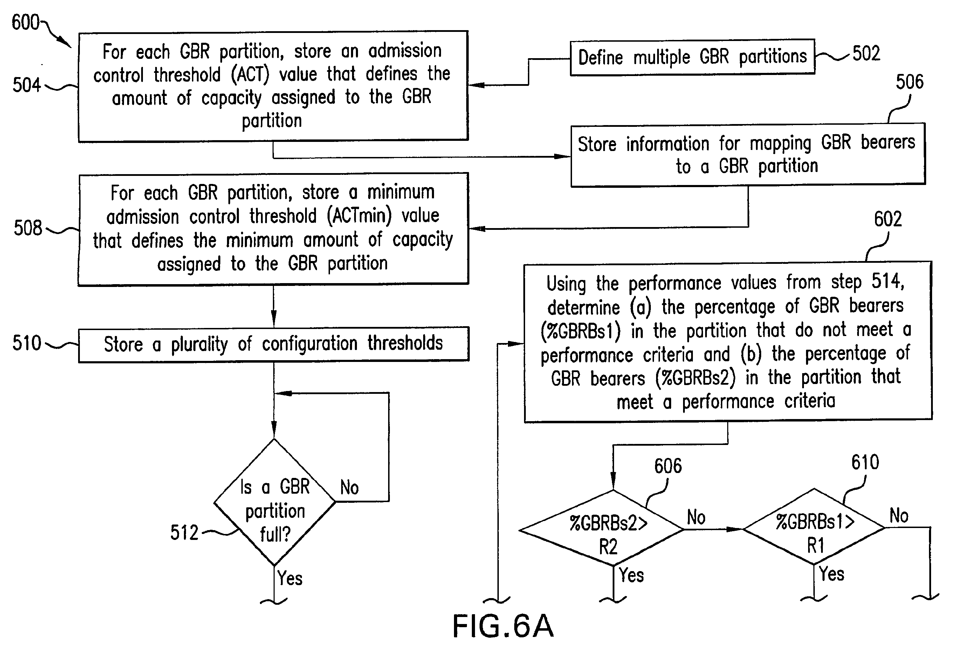

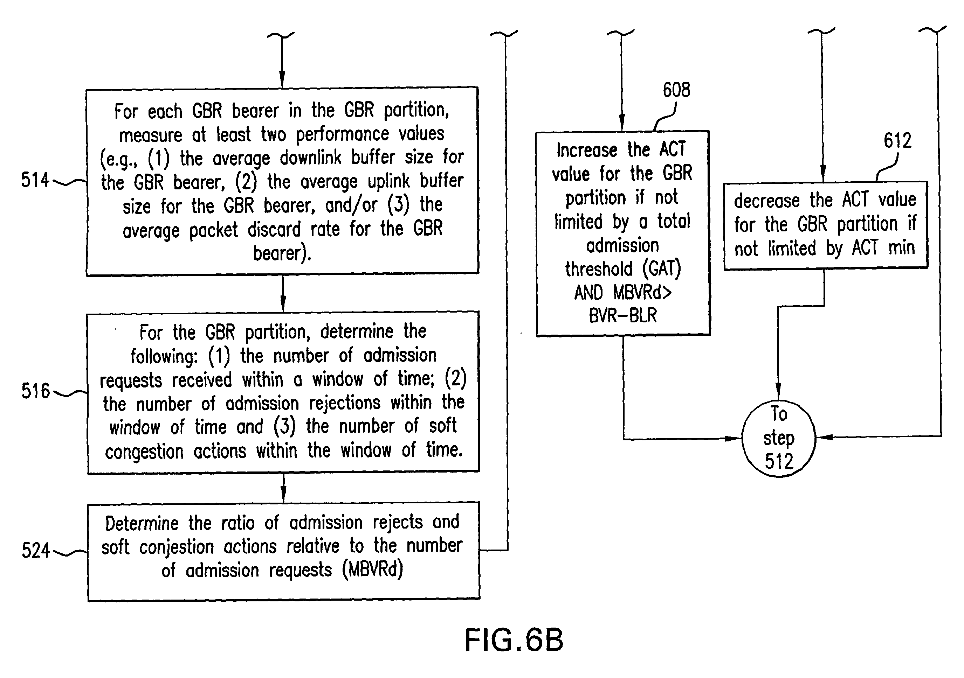

Referring now to FIG. 6, FIG. 6 is a flow chart illustrating a process 600 according to some embodiments of the invention. As illustrated, many of the steps of process 600 are the same as steps from process 500. The description if these steps will not be repeated.

In step 602, the percentage of GBR bearers (%GBRBs1) in the full partition that do not meet a performance criteria is determined and the percentage of GBR bearers (%GBRBs2) in the full partition that meet a performance criteria is determined.

In some embodiments, a GBR bearer does not meet the performance criteria if: (1) the average downlink buffer size for the GBR bearer is greater than BUFDL, (2) the average uplink buffer size for the GBR bearer is greater than BUFUL, and (3) the average packet discard rate for the GBR bearer is greater than PDR. In another embodiment, a GBR bearer does not meet the performance criteria if: (1) the average downlink buffer size for the GBR bearer is greater than BUFDL, (2) the average uplink buffer size for the GBR bearer is greater than BUFUL, or (3) the average packet discard rate for the GBR bearer is greater than PDR. In yet another embodiment, a GBR bearer does not meet the performance criteria if: (1) (a) the average downlink buffer size for the GBR bearer is greater than BUFDL and (b) the average uplink buffer size for the GBR bearer is greater than BUFUL, (2) (a) the average downlink buffer size for the GBR bearer is greater than BUFDL and (b) the average packet discard rate for the GBR bearer is greater than PDR, or (3)(a) the average uplink buffer size for the GBR bearer is greater than BUFUL and (b) the average packet discard rate for the GBR bearer is greater than PDR.

In some embodiments, a GBR bearer meets the performance criteria if: (1) the average downlink buffer size for the GBR bearer is less than BUFDL, (2) the average uplink buffer size for the GBR bearer is less than BUFUL, and (3) the average packet discard rate for the GBR bearer is less than PDR. In another embodiment, a GBR bearer meets the performance criteria if: (1) the average downlink buffer size for the GBR bearer is less than BUFDL, (2) the average uplink buffer size for the GBR bearer is less than BUFUL, or (3) the average packet discard rate for the GBR bearer is less than PDR. In yet another embodiment, a GBR bearer meets the performance criteria if: (1) (a) the average downlink buffer size for the GBR bearer is less than BUFDL and (b) the average uplink buffer size for the GBR bearer is less than BUFUL, (2) (a) the average downlink buffer size for the GBR bearer is less than BUFDL and (b) the average packet discard rate for the GBR bearer is less than PDR, or (3)(a) the average uplink buffer size for the GBR bearer is less than BUFUL and (b) the average packet discard rate for the GBR bearer is less than PDR.

In step 606, a determination is made as to whether %GBRBs2 is greater than R2. If it is, then process 600 proceeds to step 608, otherwise it proceeds to step 610. In step 608, base station 104 increases the ACT value for the GBR partition if (a) doing so would not cause the amount of GBR capacity to exceed GAT AND (b) (MBVRd > BVR-BLR).

In step 610, a determination is made as to whether %GBRBs1 is greater than RI. If it is, then process 600 proceeds to step 612, otherwise it proceeds back to step 626. In step 612, base station 104 decreases the ACT value for the GBR partition if not limited by the minimum admission control threshold (i.e., if (ACTV - INC) > ACTmin).

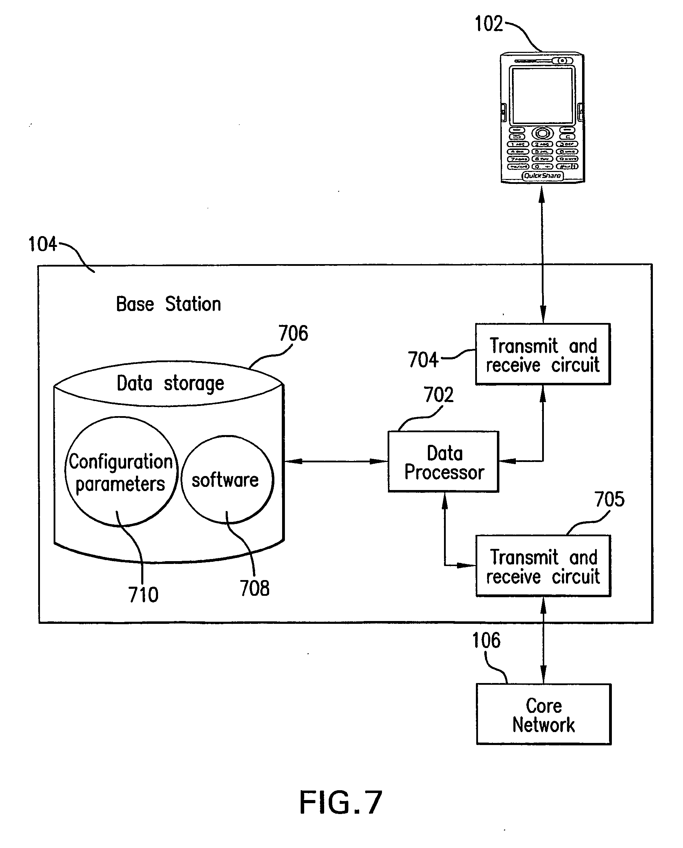

Referring now to FIG. 7, FIG. 7 is a functional block diagram of base station 104 according to some embodiments of the invention. As shown, base station 104 may comprise a data processing system 702 (e.g., one or more microprocessors), a data storage system 706 (e.g., one or more non-volatile storage devices) and computer software 708 stored on the storage system 706. Configuration parameters 710 (e.g., the above mentioned performance criteria values and other configuration values) may also be stored in storage system 706. Base station 104 also may comprise transmit/receive (Tx/Rx) circuitry 704 for transmitting data to and receiving data from UE 102 and transmit/receive (Tx/Rx) circuitry 705 for transmitting data to and receiving data from CN 106. Software 708 is configured such that when processor 702 executes software 708, base station 104 performs steps described above with reference process 500 and/or 600.
In some embodiments, some computer instructions configured to use %GBRBs1 to determine whether the admission control threshold value should be modified comprises computer instructions configured to compare %GBRBs1 to a threshold value RI, and the apparatus further comprises: computer instructions configured to determine whether the admission control threshold value (ACTV) can be decreased; and computer instructions configured to decrease the ACTV if (a) the ACTV can be decreased and (b) %GBRBs1 > RI.
In some embodiments, the computer instructions for determining whether the ACTV can be decreased comprises computer instructions for determining whether the ACTV is greater than (i) a minimum admission control threshold value plus (ii) a decrement value.
In some embodiments, the computer instructions configured to use %GBRBs2 to determine whether the admission control threshold value should be modified comprises computer instructions configured to compare %GBRBs2 to a threshold value R2, and the apparatus further comprises: computer instructions configured to determine whether ACTV can be increased; computer instructions configured to determine, for the guaranteed bit rate capacity partition, the number of admission requests received in a window of time, the number of admission rejections in the window of time, and the number of soft congestions actions that were taken in the window of time; computer instructions configured to determine a ratio value identifying the ratio of admission rejections and soft congestions actions relative to the number of admission requests; computer instructions configured to compare the ratio value to a performance criteria value: and computer instructions configured to increase ACTV if (a) ACTV can be increased and (b) %GRRBs2 > R2 and (c) the ratio value is greater than the performance criteria value.
In some embodiments, computer instructions for determining whether tile ACT\/ can be increased comprises computer instructions configured to determine whether increasing the ACTV would cause the total amount of guaranteed bit rate capacity to exceed :a predetermined total capacity.
In some embodiments, the computer instructions configured to determine %GBRBs1 comprise: (AI) computer instructions configured to determine, for each of a plurality of guaranteed bit rate bearers included in the guaranteed bit rate capacity partition, a performance value for the guaranteed bit rate bearer and (BI) computer instructions configured to determine whether the performance value for the guaranteed bit rate bearer exceed a performance threshold, and the computer instructions configured to determine %GBRBs2 comprise: (A2) computer instructions configured to determine, for each of a plurality of guaranteed bit rate bearers included in the guaranteed bit rate capacity partition, a performance value for the guaranteed bit rate bearer and (B2) computer instructions configured to determine whether the performance value for the guaranteed bit rate bearer is less than the performance threshold.
In some embodiments, the performance value determined for each of the plurality of guaranteed bit rate bearers is a computed average value.
In some embodiments, the performance value for each guaranteed bit race bearer is one of: (a) an average downlink buffer size, (b) an average uplink buffer size, and (c) an average packet discard rate.
In some embodiments, the computer instructions configured to determine %GBRBs1 further comprise: (CI) computer instructions configured to determine, for each of a plurality of guaranteed bit rate bearers included in the guaranteed bit rate capacity partition, a second performance value for the guaranteed bit rate bearer and (DI) computer instructions configured to determine whether the second performance value for the guaranteed bit rate bearer exceeds a second performance threshold, and the computer instructions configured to determine %GBRBs2 further comprise: (C2) computer instructions configured to determine, for each of a plurality of guaranteed bit rate bearers included in the guaranteed bit rate capacity partition, a second performance value for the guaranteed bit rate and (D2) computer instructions configured to determine whether the second performance value for the guaranteed bit rate bearer is less than the second performance threshold.
In some embodiments, the computer instructions configured to determine %GBRBs1 further comprise: (E1) computer instructions configured to determine, for each of a plurality of guaranteed bit rate bearers included in the guaranteed bit rate capacity partition, a third performance value for the guaranteed bit rate bearer, and (F1) computer instructions configured to determine whether the third performance value for the guaranteed bit rate bearer exceeds a third performance threshold, and the computer instructions configured to determine %GBRRBs2 further comprise: (E2) computer instructions configured to determine, for each of a plurality of guaranteed bit rate bearers includes in the guaranteed bit rate capacity partition, a third performance value for the guaranteed bit rate bearer, (F2) computer instructions configured to determine whether the third performance value for the guaranteed bit rate bearer is less than the third performance threshold.
In some embodiments, the computer instructions configured determine % GBRBs1
further comprise: (G1) computer instructions configured determine the number of guaranteed bit rate bearers in the guaranteed bit rate capacity partition that do not meet the performance criteria, wherein a guaranteed bit rate bearer in the guaranteed bit rate capacity partition does not meet the performance criteria if: the first performance value for the guaranteed bit rate bearer exceeds the first performance threshold, the second performance value for the guaranteed bit rate bearer exceeds the second performance threshold, and the third performance value for the guaranteed bit rate bearer exceeds the third performance threshold, and the computer instructions configured to determine %GBRBs2 further comprise: (G2) computer instructions configured to determine the number of guaranted bit rate bearers in the guaranteed in the guaranteed bit rate capacity partition that meet the performance criteria, wherein a guaranteed bit rate bearer in the guaranteed bit rate capacity partition meets the performance criteria if: the first performance value for performance value for the guaranteed bit rate bearer is less than the first performance threshold the second performance value for the guaranteed bit rate bearer is less than the second performance threshold, and the third performance value for the guaranteed bit rate bearer is less than the the third performance threshold.
In some embodiments, the first performance value is an average downlink buffer size, the second performance value is an average uplink buffer size, and the third performance value is an average packet discard rate.

While various embodiments of the present invention have been described above, it should be understood that they have been presented by way of example only, and not limitation. Thus, the breadth and scope of the present invention should not be limited by any of the above-described exemplary embodiments.

Additionally, while the process described above and illustrated in FIGs. 5 and 6 are shown as a sequence of steps, this was done solely for the sake of illustration. Accordingly, it is contemplated that some steps may be added, some steps may be omitted, the order of the steps may be re-arranged, and some steps may be performed in parallel.

## Claims

1. An adaptive admission control method, comprising:
storing an admission control threshold value, ACTV, for a guaranteed bit rate capacity partition, wherein the ACTV defines the amount of capacity assigned to the guaranteed bit rate capacity partition; the method being
**characterized by**
determining a value,%GBRBs1, representing a percentage of guaranteed bit rate bearers in the guaranteed bit rate capacity partition for which guaranteed bit rate bearers a performance criteria value is determined not to meet a stored performance criteria value, and/or determining a value,%GBRBs2, representing a percentage of guaranteed bit rate bearers in the guaranteed bit rate capacity partition for which guaranteed bit rate bearers a performance criteria value is determined to meet a stored performance criteria value; and
determining whether the ACTV should be modified using %GBRBs1 and/or %GBRBs2

2. The method of claim 1, wherein modifying the ACTV comprises: determining whether %GBRBs1 is greater than a threshold ,RI; determining whether the ACTV can be decreased; and decreasing the ACTV if (a) the ACTV can be decreased and (b) %GBRBs1 > RI.

3. The method of claim 2, wherein the step of determining whether the ACTV can be decreased comprises: determining whether the ACTV is greater than (i) a minimum admission control threshold value plus (ii) a decrement value.

4. The method of any one claims 1-3, wherein modifying the admission control threshold value comprises: determining whether %GBRBs2 is greater than a threshold R2; determining whether ACTV can be increased; determining, for the guaranteed bit rate capacity partition, a number of admission requests received in a window of time, a number of admission rejections in the window of time, and a number of soft congestions actions that were taken in the window of time; determining a ratio value identifying a ratio of admission rejections and soft congestions actions relative to the number of admission requests; comparing the ratio value to a performance criteria value; and increasing ACTV if (a) ACTV can be increased and (b) %GBRBs2 > R2 and (c) the ratio value is greater than the performance criteria value.

5. The method of claim 4, wherein the step of determining whether the ACTV can be increased comprises determining whether increasing the ACTV would cause a total amount of guaranteed bit rate capacity to exceed a predetermined total capacity.

6. The method of any one of claims 1-5, wherein the step of determining %GBRBs1 comprises: (A1) for each of a plurality of guaranteed bit rate bearers included in the guaranteed bit rate capacity partition, determining a performance value for the guaranteed bit rate bearer; and (B1) determining whether the performance value for the guaranteed bit rate bearer exceeds a performance threshold, and the step of determining %GBRBs2 comprises: (A2) for each of a plurality of guaranteed bit rate bearers included in the guaranteed bit rate capacity partition, determining a performance value for the guaranteed bit rate bearer; and (B2) determining whether the performance value for the guaranteed bit rate bearer is less than the performance threshold.

7. The method of claim 6, wherein the performance value determined for each of the plurality of guaranteed bit rate bearers is a computed average value.

8. The method of claim 7, wherein the performance value for each guaranteed bit rate bearer is one of: (a) an average downlink buffer size, (b) an average uplink buffer size, and (c) an average packet discard rate.

9. The method of any one of claims 6-8, wherein the step of determining %GBRBs1 further comprises: (C1) for each of a plurality of guaranteed bit rate bearers included in the guaranteed bit rate capacity partition, determining a second performance value for the guaranteed bit rate bearer; and (D1) determining whether the second performance value for the guaranteed bit rate bearer exceeds a second performance threshold the step of determining %GBRBs2 further comprises: (C2) for each of a plurality of guaranteed bit rate bearers included in the guaranteed bit rate capacity partition, determining a second performance value for the guaranteed bit rate bearer; and (D2) determining whether the second performance value for the guaranteed bit rate bearer is less than the second performance threshold.

10. The method of claim 9, wherein the step of determining %GBRBs1 further comprises: (E1) for each of a plurality of guaranteed bit rate bearers included in the guaranteed bit rate capacity partition, determining a third performance value for the guaranteed bit rate bearer; and (F1) determining whether the third performance value for the guaranteed bit rate bearer exceeds a third performance threshold, and the step of determining %GBRBs2 further comprises: (E2) for each of a plurality of guaranteed bit rate bearers included in the guaranteed bit rate capacity partition, determining a third performance value for the guaranteed bit rate bearer; and (F2) determining whether the third performance value for the guaranteed bit rate bearer is less than the third performance threshold.

11. The method of claim 10, wherein the step of determining %GBRBs1 further comprises: (G1) determining the number of guaranteed bit rate bearers in the guaranteed bit rate capacity partition that do not meet the performance criteria, wherein a guaranteed bit rate bearer in the guaranteed bit rate capacity partition does not meet the performance criteria if: the first performance value for the guaranteed bit rate bearer exceeds the first performance threshold, the second performance value for the guaranteed bit rate bearer exceeds the second performance threshold, and the third performance value for the guaranteed bit rate bearer exceeds the third performance threshold, and the step of determining %GBRBs2 further comprises: (G2) determining the number of guaranteed bit rate bearers in the guaranteed bit rate capacity partition that meet the performance criteria, wherein a guaranteed bit rate bearer in the guaranteed bit rate capacity partition meets the performance criteria if: the first performance value for the guaranteed bit rate bearer is less than the first performance threshold, the second performance value for the guaranteed bit rate bearer is less than the second performance threshold, and the third performance value for the guaranteed bit rate bearer is less than the third performance threshold.

12. The method of claims 10-11, wherein: the first performance value is an average downlink buffer size, the second performance value is an average uplink buffer size, and the third performance value is an average packet discard rate.

13. The method of any one of claims 1-12, wherein the method is performed by a base station.

14. An apparatus for performing an adaptive admission control method, the apparatus comprising:
a data storage system that stores an admission control threshold value, ACTV, for a guaranteed bit rate capacity partition, wherein the ACTV defines the amount of capacity assigned to the guaranteed bit rate capacity partition;
a data processor coupled to the data storage system; and
computer instructions stored in the data storage system; the apparatus being
**characterized in that**
the data processor is configured to, when executing the computer instructions, determine a value ,%GBRBs1, representing the percentage of guaranteed bit rate bearers in the guaranteed bit rate capacity partition for which guaranteed bit rate bearers a performance criteria value is determined not to meet a stored performance criteria value, and/or determine a value ,%GBRBs2, representing the percentage of guaranteed bit rate bearers in the guaranteed bit rate capacity partition for which guaranteed bit rate bearers a performance criteria value is determined to meet a stored performance criteria value;
and use %GBRBs1 and/or %GBRBs2 to determine whether the admission control threshold value should be modified.

## Patentansprüche

1. Adaptives Zugangssteuerungsverfahren, umfassend:
Speichern eines Zugangssteuerungsschwellwerts, ACTV, für einen Kapazitätsteilungsbereich mit garantierter Bitrate, worin der ACTV den Kapazitätsbetrag definiert, der dem Kapazitätsteilungsbereich mit garantierter Bitrate zugewiesen wird;
wobei das Verfahren **gekennzeichnet ist durch**:
Bestimmen eines Werts, %GBRBs1, der einen Prozentsatz von Trägem mit garantierter Bitrate in dem Kapazitätsteilungsbereich mit garantierter Bitrate darstellt, wobei für diese Träger mit garantierter Bitrate ein Leistungsvermögenskriterienwert bestimmt wird, der einen gespeicherten Leistungsvermögenskriterienwert nicht erfüllt, und/oder Bestimmen eines Werts, %GBRBs2, der einen Prozentsatz von Trägem mit garantierter Bitrate in dem Kapazitätsteilungsbereich mit garantierter Bitrate darstellt, wobei für diese Träger mit garantierter Bitrate ein Leistungsvermögenskriterienwert bestimmt wird, der einen gespeicherten Leistungsvermögenskriterienwert erfüllt; und
unter Verwendung von %GBRBs1 und/oder %GBRBs2 erfolgendes Bestimmen, ob der ACTV modifiziert werden sollte.

2. Verfahren nach Anspruch 1, worin das Modifizieren des ACTV umfasst: Bestimmen, ob %GBRBs1 größer als ein Schwellwert R1 ist; Bestimmen, ob der ACTV verringert werden kann; und Verringern des ACTV, wenn (a) der ACTV verringert werden kann und (b) %GBRBs1 > R1.

3. Verfahren nach Anspruch 2, worin der Schritt des Bestimmens, ob der ACTV verringert werden kann, umfasst: Bestimmen, ob der ACTV größer als (i) ein Mindest-Zugangssteuerungsschwellwert plus (ii) ein Dekrementwert ist.

4. Verfahren nach einem der Ansprüche 1 bis 3, worin das Modifizieren des Zugangssteuerungsschwellwerts umfasst: Bestimmen, ob %GBRBs2 größer als ein Schwellwert R2 ist; Bestimmen, ob der ACTV erhöht werden kann; für den Kapazitätsteilungsbereich mit garantierter Bitrate erfolgendes Bestimmen einer Anzahl von Zugangsanfragen, die in einem Zeitfenster empfangen wurden, einer Anzahl von Zugangsablehnungen in dem Zeitfenster und einer Anzahl von "weiche Überlastung"-Handlungen, die in dem Zeitfenster vorgenommen wurden; Bestimmen eines Verhältniswerts, der ein Verhältnis von Zugangsablehnungen und "weiche Überlastung"-Handlungen relativ zur Anzahl von Zugangsanfragen kennzeichnet; Vergleichen des Verhältniswerts mit einem Leistungsvermögenskriterienwert; und Erhöhen von ACTV, wenn (a) ACTV erhöht werden kann und (b) %GBRBs2 > R2 und (c) der Verhältniswert größer als der Leistungsvermögenskriterienwert ist.

5. Verfahren nach Anspruch 4, worin der Schritt des Bestimmens, ob der ACTV erhöht werden kann, umfasst: Bestimmen, ob das Erhöhen des ACTV bewirken würde, dass ein Gesamtbetrag der Kapazität mit garantierter Bitrate eine vorbestimmte Gesamtkapazität übersteigt.

6. Verfahren nach einem der Ansprüche 1 bis 5, worin der Schritt des Bestimmens von %GBRBs1 umfasst: (A1) für jeden aus einer Vielzahl von Trägem mit garantierter Bitrate, die in den Kapazitätsteilungsbereich mit garantierter Bitrate eingeschlossen sind, erfolgendes Bestimmen eines Leistungsvermögenswerts für den Träger mit garantierter Bitrate, und (B1) Bestimmen, ob der Leistungsvermögenswert für den Träger mit garantierter Bitrate einen Leistungsvermögensschwellwert übersteigt; und der Schritt des Bestimmens von %GBRBs2 umfasst: (A2) für jeden aus einer Vielzahl von Trägem mit garantierter Bitrate, die in den Kapazitätsteilungsbereich mit garantierter Bitrate eingeschlossen sind, erfolgendes Bestimmen eines Leistungsvermögenswerts für den Träger mit garantierter Bitrate, und (B2) Bestimmen, ob der Leistungsvermögenswert für den Träger mit garantierter Bitrate kleiner als der Leistungsvermögensschwellwert ist.

7. Verfahren nach Anspruch 6, worin der Leistungsvermögenswert, der für jeden aus der Vielzahl von Trägem mit garantierter Bitrate bestimmt wird, ein berechneter Mittelwert ist.

8. Verfahren nach Anspruch 7, worin der Leistungsvermögenswert für jeden Träger mit garantierter Bitrate eines der folgenden ist: (a) eine mittlere Abwärtsstreckenpuffergröße, (b) eine mittlere Aufwärtsstreckenpuffergröße und (c) eine mittlere Paketverwerfungsrate.

9. Verfahren nach einem der Ansprüche 6 bis 8, worin der Schritt des Bestimmens von %GBRBs1 ferner umfasst: (C1) für jeden aus einer Vielzahl von Trägem mit garantierter Bitrate, die in den Kapazitätsteilungsbereich mit garantierter Bitrate eingeschlossen sind, erfolgendes Bestimmen eines zweiten Leistungsvermögenswerts für den Träger mit garantierter Bitrate, und (D1) Bestimmen, ob der zweite Leistungsvermögenswert für den Träger mit garantierter Bitrate einen zweiten Leistungsvermögensschwellwert übersteigt; und der Schritt des Bestimmens von %GBRBs2 ferner umfasst: (C2) für jeden aus einer Vielzahl von Trägem mit garantierter Bitrate, die in den Kapazitätsteilungsbereich mit garantierter Bitrate eingeschlossen sind, erfolgendes Bestimmen eines zweiten Leistungsvermögenswerts für den Träger mit garantierter Bitrate, und (D2) Bestimmen, ob der zweite Leistungsvermögenswert für den Träger mit garantierter Bitrate kleiner als der zweite Leistungsvermögensschwellwert ist.

10. Verfahren nach Anspruch 9, worin der Schritt des Bestimmens von %GBRBs1 ferner umfasst: (E1) für jeden aus einer Vielzahl von Trägem mit garantierter Bitrate, die in den Kapazitätsteilungsbereich mit garantierter Bitrate eingeschlossen sind, erfolgendes Bestimmen eines dritten Leistungsvermögenswerts für den Träger mit garantierter Bitrate, und (F1) Bestimmen, ob der dritte Leistungsvermögenswert für den Träger mit garantierter Bitrate einen dritten Leistungsvermögensschwellwert übersteigt; und der Schritt des Bestimmens von %GBRBs2 ferner umfasst: (E2) für jeden aus einer Vielzahl von Trägem mit garantierter Bitrate, die in den Kapazitätsteilungsbereich mit garantierter Bitrate eingeschlossen sind, erfolgendes Bestimmen eines dritten Leistungsvermögenswerts für den Träger mit garantierter Bitrate, und (F2) Bestimmen, ob der dritte Leistungsvermögenswert für den Träger mit garantierter Bitrate kleiner als der dritte Leistungsvermögensschwellwert ist.

11. Verfahren nach Anspruch 10, worin der Schritt des Bestimmens von %GBRBs1 ferner umfasst: (G1) Bestimmen der Anzahl der Träger mit garantierter Bitrate in dem Kapazitätsteilungsbereich mit garantierter Bitrate, welche die Leistungsvermögenskriterien nicht erfüllen, worin ein Träger mit garantierter Bitrate in dem Kapazitätsteilungsbereich mit garantierter Bitrate die Leistungsvermögenskriterien nicht erfüllt, wenn: der erste Leistungsvermögenswert für den Träger mit garantierter Bitrate den ersten Leistungsvermögensschwellwert übersteigt, der zweite Leistungsvermögenswert für den Träger mit garantierter Bitrate den zweiten Leistungsvermögensschwellwert übersteigt und der dritte Leistungsvermögenswert für den Träger mit garantierter Bitrate den dritten Leistungsvermögensschwellwert übersteigt; und der Schritt des Bestimmens von %GBRBs2 ferner umfasst: (G2) Bestimmen der Anzahl der Träger mit garantierter Bitrate in dem Kapazitätsteilungsbereich mit garantierter Bitrate, welche die Leistungsvermögenskriterien erfüllen, worin ein Träger mit garantierter Bitrate in dem Kapazitätsteilungsbereich mit garantierter Bitrate die Leistungsvermögenskriterien erfüllt, wenn: der erste Leistungsvermögenswert für den Träger mit garantierter Bitrate kleiner als der erste Leistungsvermögensschwellwert ist, der zweite Leistungsvermögenswert für den Träger mit garantierter Bitrate kleiner als der zweite Leistungsvermögensschwellwert ist und der dritte Leistungsvermögenswert für den Träger mit garantierter Bitrate kleiner als der dritte Leistungsvermögensschwellwert ist.

12. Verfahren nach einem der Ansprüche 10 und 11, worin: der erste Leistungsvermögenswert eine mittlere Abwärtsstreckenpuffergröße ist, der zweite Leistungsvermögenswert eine mittlere Aufwärtsstreckenpuffergröße ist und der dritte Leistungsvermögenswert eine mittlere Paketverwerfungsrate ist.

13. Verfahren nach einem der Ansprüche 1 bis 12, worin das Verfahren durch eine Basisstation durchgeführt wird.

14. Vorrichtung zum Durchführen eines adaptiven Zugangssteuerungsverfahrens, wobei die Vorrichtung umfasst:
ein Datenspeichersystem, das einen Zugangssteuerungsschwellwert, ACTV, für einen Kapazitätsteilungsbereich mit garantierter Bitrate speichert, worin der ACTV den Kapazitätsbetrag definiert, der dem Kapazitätsteilungsbereich mit garantierter Bitrate zugewiesen wird;
einen Datenprozessor, der mit dem Datenspeichersystem gekoppelt ist; und
Computeranweisungen, die in dem Datenspeichersystem gespeichert sind,
wobei die Vorrichtung **dadurch gekennzeichnet ist, dass**:
der Datenprozessor dafür konfiguriert ist, wenn er die Computeranweisungen ausführt, einen Wert, %GBRBs1, zu bestimmen, der den Prozentsatz der Träger mit garantierter Bitrate in dem Kapazitätsteilungsbereich mit garantierter Bitrate darstellt, wobei für diese Träger mit garantierter Bitrate ein Leistungsvermögenskriterienwert bestimmt wird, der einen gespeicherten Leistungsvermögenskriterienwert nicht erfüllt, und/oder einen Wert, %GBRBs2, zu bestimmen, der den Prozentsatz der Träger mit garantierter Bitrate in dem Kapazitätsteilungsbereich mit garantierter Bitrate darstellt, wobei für diese Träger mit garantierter Bitrate ein Leistungsvermögenskriterienwert bestimmt wird, der einen gespeicherten Leistungsvermögenskriterienwert erfüllt;
und %GBRBs1 und/oder %GBRBs2 zu verwenden, um zu bestimmen, ob der Zugangssteuerungsschwellwert modifiziert werden sollte.

## Revendications

1. Procédé de commande d'admission adaptative, comprenant les étapes ci-dessous consistant à :
stocker une valeur seuil de commande d'admission, ACTV, pour une partition de capacités à débit binaire garanti, dans laquelle la valeur ACTV définit la quantité de capacités affectée à la partition de capacités à débit binaire garanti ; le procédé étant
**caractérisé par** les étapes ci-dessous consistant à :
déterminer une valeur, %GBRBs1, représentant un pourcentage de porteuses à débit binaire garanti dans la partition de capacités à débit binaire garanti, pour des porteuses à débit binaire garanti pour lesquelles une valeur de critères de performances est déterminée comme ne satisfaisant pas à une valeur de critères de performances stockée, et/ou déterminer une valeur, %GBRBs2, représentant un pourcentage de porteuses à débit binaire garanti dans la partition de capacités à débit binaire garanti, pour des porteuses à débit binaire garanti pour lesquelles une valeur de critères de performances est déterminée comme satisfaisant à une valeur de critères de performances stockée ; et
déterminer si la valeur ACTV devrait être modifiée en utilisant %GBRBs1 et/ou %GBRBs2.

2. Procédé selon la revendication 1, dans lequel l'étape consistant à modifier la valeur ACTV comprend les étapes ci-dessous consistant à : déterminer si la valeur %GBRBs1 est supérieure à un seuil, R1 ; déterminer si la valeur ACTV peut être diminuée ; et diminuer la valeur ACTV si (a) la valeur ACTV peut être diminuée et si (b) %GBRBs1 >R1.

3. Procédé selon la revendication 2, dans lequel l'étape consistant à déterminer si la valeur ACTV peut être diminuée comprend l'étape ci-après consistant à : déterminer si la valeur ACTV est supérieure à (i) une valeur seuil de commande d'admission minimale plus (ii) une valeur de décrément.

4. Procédé selon l'une quelconque des revendications 1 à 3, dans lequel l'étape consistant à modifier la valeur seuil de commande d'admission comprend l'étape ci-après consistant à : déterminer si la valeur %GBRBs2 est supérieure à un seuil R2 ; déterminer si la valeur ACTV peut être augmentée ; déterminer, pour la partition de capacités à débit binaire garanti, un nombre de demandes d'admission reçues au cours d'une fenêtre temporelle, un nombre de refus d'admission dans la fenêtre temporelle, et un nombre d'étapes d'encombrements sans coupure qui ont été mises en oeuvre dans la fenêtre temporelle ; déterminer une valeur de rapport identifiant un rapport de refus d'admission et d'étapes d'encombrements sans coupure relativement au nombre de demandes d'admission ; comparer la valeur de rapport à une valeur de critères de performances ; et augmenter la valeur ACTV si (a) la valeur ACTV peut être augmentée, si (b) %GBRBs2 > R2, et si (c) la valeur de rapport est supérieure à la valeur de critères de performances.

5. Procédé selon la revendication 4, dans lequel l'étape consistant à déterminer si la valeur ACTV peut être augmentée consiste à déterminer si l'augmentation de la valeur ACTV amènerait une quantité totale de capacités à débit binaire garanti à dépasser une quantité totale prédéterminée.

6. Procédé selon l'une quelconque des revendications 1 à 5, dans lequel l'étape consistant à déterminer la valeur %GBRBs1 comprend les étapes ci-après consistant à : (A1) pour chaque porteuse d'une pluralité de porteuses à débit binaire garanti incluses dans la partition de capacités à débit binaire garanti, déterminer une valeur de performances pour la porteuse à débit binaire garanti, et (B1) déterminer si la valeur de performances pour la porteuse à débit binaire garanti dépasse un seuil de performances, et l'étape consistant à déterminer la valeur %GBRBs2 comporte les étapes ci-après consistant à : (A2) pour chaque porteuse d'une pluralité de porteuses à débit binaire garanti incluses dans la partition de capacités à débit binaire garanti, déterminer une valeur de performances pour la porteuse à débit binaire garanti, et (B2) déterminer si la valeur de performances pour la porteuse à débit binaire garanti est inférieure au seuil de performances.

7. Procédé selon la revendication 6, dans lequel la valeur de performances déterminée pour chacune de la pluralité de porteuses à débit binaire garanti est une valeur moyenne calculée.

8. Procédé selon la revendication 7, dans lequel la valeur de performances pour chaque porteuse à débit binaire garanti est l'une parmi les valeurs suivantes : (a) une taille moyenne de mémoire tampon en liaison descendante, (b) une taille moyenne de mémoire tampon en liaison montante, et (c) un taux moyen de mise au rebus de paquets.

9. Procédé selon l'une quelconque des revendications 6 à 8, dans lequel l'étape consistant à déterminer la valeur %GBRBs1 comprend en outre les étapes ci-après consistant à : (C1) pour chaque porteuse d'une pluralité de porteuses à débit binaire garanti incluses dans la partition de capacités à débit binaire garanti, déterminer une deuxième valeur de performances pour la porteuse à débit binaire garanti, et (D1) déterminer si la deuxième valeur de performances pour la porteuse à débit binaire garanti dépasse un deuxième seuil de performances ; et l'étape consistant à déterminer la valeur %GBRBs2 comprend en outre les étapes ci-après consistant à : (C2) pour chaque porteuse d'une pluralité de porteuses à débit binaire garanti incluses dans la partition de capacités à débit binaire garanti, déterminer une deuxième valeur de performances pour la porteuse à débit binaire garanti, et (D2) déterminer si la deuxième valeur de performances pour la porteuse à débit binaire garanti est inférieure au deuxième seuil de performances.

10. Procédé selon la revendication 9, dans lequel l'étape consistant à déterminer la valeur %GBRBs1 comprend en outre les étapes ci-après consistant à : (E1) pour chaque porteuse d'une pluralité de porteuses à débit binaire garanti incluses dans la partition de capacités à débit binaire garanti, déterminer une troisième valeur de performances pour la porteuse à débit binaire garanti ; et (F1) déterminer si la troisième valeur de performances pour la porteuse à débit binaire garanti dépasse un troisième seuil de performances ; et l'étape consistant à déterminer la valeur %GBRBs2 comprend en outre les étapes ci-après consistant à : (E2) pour chaque porteuse d'une pluralité de porteuses à débit binaire garanti incluses dans la partition de capacités à débit binaire garanti, déterminer une troisième valeur de performances pour la porteuse à débit binaire garanti ; et (F2) déterminer si la troisième valeur de performances pour la porteuse à débit binaire garanti est inférieure au troisième seuil de performances.

11. Procédé selon la revendication 10, dans lequel l'étape consistant à déterminer la valeur %GBRBs1 comprend en outre l'étape ci-dessous consistant à : (G1) déterminer le nombre de porteuses à débit binaire garanti dans la partition de capacités à débit binaire garanti qui ne satisfont pas aux critères de performances, dans lequel une porteuse à débit binaire garanti dans la partition de capacités à débit binaire garanti ne satisfait pas aux critères de performances si : la première valeur de performances pour la porteuse à débit binaire garanti dépasse le premier seuil de performances, la deuxième valeur de performances pour la porteuse à débit binaire garanti dépasse le deuxième seuil de performances, et la troisième valeur de performances pour la porteuse à débit binaire garanti dépasse le troisième seuil de performances, et l'étape consistant à déterminer la valeur %GBRBs2 comprend en outre l'étape ci-après consistant à : (G2) déterminer le nombre de porteuses à débit binaire garanti dans la partition de capacités à débit binaire garanti qui satisfont aux critères de performances, dans lequel une porteuse à débit binaire garanti dans la partition de capacités à débit binaire garanti satisfait aux critères de performances si : la première valeur de performances pour la porteuse à débit binaire garanti est inférieure au premier seuil de performances, la deuxième valeur de performances pour la porteuse à débit binaire garanti est inférieure au deuxième seuil de performances, et la troisième valeur de performances pour la porteuse à débit binaire garanti est inférieure au troisième seuil de performances.

12. Procédé selon les revendications 10 et 11, dans lequel: la première valeur de performances est une taille moyenne de mémoire tampon en liaison descendante, la deuxième valeur de performances est une taille moyenne de mémoire tampon en liaison montante, et la troisième valeur de performances est un taux moyen de mise au rebus de paquets.

13. Procédé selon l'une quelconque des revendications 1 à 12, dans lequel le procédé est mis en oeuvre par une station de base.

14. Dispositif destiné à mettre en oeuvre un procédé de commande d'admission adaptative, le dispositif comprenant :
un système de stockage de données qui stocke une valeur seuil de commande d'admission, ACTV, pour une partition de capacités à débit binaire garanti, dans laquelle la valeur ACTV définit la quantité de capacités affectée à la partition de capacités à débit binaire garanti ;
un processeur de données couplé au système de stockage de données ; et
des instructions informatiques stockées dans le système de stockage de données ;
le dispositif étant **caractérisé en ce que**
le processeur de données est configuré de manière à, lors de l'exécution des instructions informatiques, déterminer une valeur, %GBRBs1, représentant le pourcentage de porteuses à débit binaire garanti dans la partition de capacités à débit binaire garanti, pour des porteuses à débit binaire garanti pour lesquelles une valeur de critères de performances est déterminée comme ne satisfaisant pas à une valeur de critères de performances stockée ; et/ou déterminer une valeur, %GBRBs2, représentant le pourcentage de porteuses à débit binaire garanti dans la partition de capacités à débit binaire garanti, pour des porteuses à débit binaire garanti pour lesquelles une valeur de critères de performances est déterminée comme satisfaisant à une valeur de critères de performances stockée ; et
utiliser la valeur %GBRBs1 et/ou la valeur %GBRBs2 en vue de déterminer si la valeur seuil de commande d'admission devrait être modifiée.
